# EUROPEAN PATENT SPECIFICATION

(11) **EP 1 698 493 B1**
(45) Date of publication and mention of the grant of the patent: **11.08.2010**
(21) Application number: 04819864.2
(22) Date of filing: 01.12.2004
(51) Int. Cl.: B60C 17/00, B60C 9/20, B60C 9/22

(54) **PNEUMATIC TIRE**
LUFTREIFEN
PNEUMATIQUE

(30) Priority: 02.12.2003 JP 2003403579
(43) Date of publication of application: 06.09.2006
(73) Proprietor: Bridgestone Corporation, Tokyo 104-8340 (JP)
(72) Inventor: YOSHIMI, Takuya, c/o BRIDGESTONE CORPORATION, Kodaira-shi, Tokyo 187-8531 (JP)
(74) Representative: Whalley, Kevin
(86) International application number: PCT/JP2004/017873
(87) International publication number: WO 2005/053971

(56) References cited:
- EP-A1- 0 661 179
- EP-A1- 1 431 076
- EP-A2- 0 454 432
- DE-A1- 4 135 599
- GB-A- 2 003 525
- JP-A- 4 002 832
- JP-A- 9 011 714
- JP-A- 9 011 714
- JP-A- 11 227 427
- JP-A- 2000 043 518
- JP-A- 2000 043 518
- JP-A- 2001 063 310
- JP-A- 2001 246 912
- JP-A- 2002 301 914
- JP-B2- 2 757 940
- US-A1- 5 639 320

## Description

The present invention relates to a pneumatic tire, and in particular to a so-called side-reinforced run flat tire capable of being run for a predetermined distance even if an internal pressure thereof drops to nearly zero, due to puncture and so forth, thereby attaining enhancement in safety when the tire is being run with the internal pressure in a range of 50 to 150 kPa.

The conventional side-reinforced run flat tire described as above with a belt-reinforcing layer (cap / layer) provided on the outer side of a belt layer, in the radial direction of the tire, includes, for example, a pneumatic radial tire disclosed in Patent Document 1, which discloses all the features of the preamble of claim 1. As shown in Fig. 8, a pneumatic radial tire 21 comprises a tread 22, sidewalls 23 extending inward in the radial direction of the tire, from respective ends of the tread 22, and beads 24 positioned at respective ends of the sidewalls 23, on the inner side of the tire, in the radial direction thereof.

A bead core 25 used for fixing the pneumatic radial tire 21 to a rim, not shown, against an internal pressure of the pneumatic radial tire 21 is provided inside the respective beads 24. Further, there is provided a carcass ply 26 in a toroidal form, extended up to the respective beads 24 via the tread 22, and the respective sidewalls 23 so as to be folded back along the peripheries of the respective bead cores 25 inside the beads 24 from the inner side to the outer side, in the direction of the axis of tire rotation to be thereby cocked outward in the radial direction of the tire. A portion of each of the carcass plies 26, extending from the inner side of the tread 22, in the radial direction of the tire, to the bead core 25 is a body portion 26a, and a portion of each of the carcass plies 26, folded back toward the external periphery of the bead core 25 is a fold-back part 26b. Rubber layers of the pneumatic radial tire 21 are reinforced by the respective carcass plies 26, thereby forming a shape of the tire in whole.

A belt layer 27 comprised of a first belt layer 27a, and a second belt layer 27b is provided in a region on the inner side of the tread 22, in the radial direction of the tire, and on the outer side of each of the carcass plies 26, in the radial direction of the tire; and further, on the outer side of the belt layer 27, in the radial direction of the tire, there are provided two belt-reinforcing layer 28a, 28b. The belt-reinforcing layer 28a, 28b are made up of an organic fiber cord, respectively. The belt layer 27 is not limited to two layers, but may comprise one layer, or three or more layers.

An inner liner 29 is stuck to the surface of each of the sidewalls 23, on the inner side thereof, in the direction of the axis of tire rotation, and further, a reinforcing rubber layer 30 substantially crescentic in sectional shape, extending from the tread 22 to the respective beads 24 via the respective sidewalls 23 is provided in regions, on the inner sides of the respective body portions 26a, in the direction of the axis of tire rotation, and on the outer side of the respective inner liners 29, in the direction of the axis of tire rotation, that is, in a portion of each of the carcass plies, sandwiched between the body portion 26a and the inner liner 29.

For the organic fiber cord, use is made of a cord smaller in elongation than a Nylon (registered trademark) cord that is an organic fiber cord for use in a common side-reinforced run flat tire, and so forth, for example a cord for at least part of which polyethylene - 2, and 6 - naphthalate fiber is used, thereby enhancing rigidity of the belt-reinforcing layers, leading to higher rigidity of a belt structure as a whole, including the belt layer, and the belt-reinforcing layers, than rigidity of the common side-reinforced run flat tire. As a result of enhancement in the rigidity of the belt structure as a whole, vibration of the belt structure is effectively deterred, resulting in reduction of noise in a vehicle compartment.

Further, as another example of the side-reinforced run flat tire provided with belt-reinforcing layers on a side of a belt layer, adjacent to the outer periphery of the tire (on the outer side of the belt layer, in the radial direction of the tire), there is disclosed a radial ply pneumatic tire in Patent Document 2. With the radial ply pneumatic tire, an overlay layer made of aramid-reinforced fabric is provided on the outer side of a belt ply, in the radial direction of the tire. With the radial ply pneumatic tire, since aramid is effectively higher in modulus of elasticity than Nylon, it is possible to implement reinforcement of the tire, stronger than that by two Nylon layers.

With the side-reinforced run flat tire provided with the belt-reinforcing layers on the outer side of the belt layer, in the radial direction of the tire, either a high-modulus cord or a low- modulus cord is used according to various target performances, and so forth, at the time of running at a normal internal pressure and run-flat tire running.

Meanwhile, as a normal tire provided with a belt-reinforcing layer, there is included, for example, "a tire having improved running noise performance" as disclosed in Patent Document 3. This tire is provided with a carcass ply, and two belt layers disposed on the outer side of the carcass ply, in the radial direction of the tire, and a ply made up of a bi-modulus reinforcement is disposed between the carcass ply, and the one belt layer of the two belt layers, disposed on a side thereof, adjacent to the carcass ply, between the two belt layers, or on a side of the carcass ply, adjacent to the inner periphery of the tire (on the inner side of the carcass ply, in the radial direction of the tire). Herein, the bi-modulus reinforcement is formed by combining together at least one fiber made of material high in modulus of elasticity {aramid is preferable, however, use may be made of other fabric high in modulus of elasticity, made of a liquid crystal polymer such as, for example, PBO (paraphenylenebenzobisoxazole)} and material low in modulus of elasticity {Nylon is preferable, however, use may be made of PET (polyethylene terephthalate)} to be then helically twisted.

The tire provided with the bi-modulus reinforcement exhibits a behavior of a reinforcement low in modulus of elasticity at the time of low-speed running while reacting as a reinforcement high in modulus of elasticity at the time of high-speed running. Owing to such characteristic of the bi-modulus reinforcement as described, reduction in running noise, and enhancement in drift rigidity performance and speed resistance performance can be attained.

Further, as another example of a normal tire provided with a belt-reinforcing layer, there is disclosed a pneumatic tire in Patent Document 4. This pneumatic tire is provided with a belt layer disposed on the outer side of a carcass ply, in the radial direction of the tire, and a band layer disposed on the outer side of the belt layer. The band layer is formed by helically winding at least one strand of a composite cord made up by twisting together a low-modulus filament composed of Nylon fiber, and so forth, and a high-modulus filament composed of aromatic polyamide fiber and so forth, so as to be continuous in the circumferential direction of the tire.

With this pneumatic tire, since the composite cord has a low-modulus region, vulcanizing forming is easily executed while using the high-modulus filament, so that dilation (lifting) on the outer circumference of the tire as completed, at the time of rotation at a high speed, is decreased owing to the high-modulus filament, thereby preventing exfoliation between rubber and the carcass ply, at the ends of the belt layer, and alleviating vibration. More specifically, it becomes possible to prevent the lifting at the time of rotation at a high speed that is a drawback of the tire provided with the band layer using the low-modulus filament composed of Nylon fiber, and so forth, and also to prevent aggravation in deformation of the tire, and increase in vibration, at the time of rotation at a high speed, that is a drawback of the tire provided with the band layer using the high-modulus filament composed of polyester, and so forth.

Thus, with the normal tire provided with the belt-reinforcing layer disposed on the outer side of the belt layer in the radial direction of the tire, the composite cord formed by twisting the high-modulus cord, and the low- modulus cord together is used as the belt-reinforcing layer in order to improve high-speed running performance, and so forth.
Patent Document 1: JP 2000 - 43518 A
Patent Document 2: JP 6 - 191244 A
Patent Document 3: JP 2001 - 63310 A
Patent Document 4: JP 2757940 B

If an internal pressure of a tire drops to 50 to 150 kPa due to leakage of air, and so forth, with a vehicle in a state as-fitted with normal tires, a driver will become aware of a drop in the internal pressure owing to a change in driving comfort, and driving stability (controllability · stability), so that countermeasures, such as repair / replacement of the tire, filling the tire up with air, and so forth can be taken by the driver.

With the side-reinforced run flat tire, however, a longitudinal spring constant is high owing to presence of a side reinforcing rubber layer, so that a driver has difficulties in taking notice of the internal pressure dropping to 50 to 150 kPa. Accordingly, there is a high possibility that the driver keeps driving until occurrence of breakage of the tire. Hence, it is very important to secure safety when the vehicle is running with the side-reinforced run flat tire at its internal pressure in the range of 50 to 150 kPa.

However, with the conventional side-reinforced run flat tire provided with the belt-reinforcing layer, as disclosed in Patent Documents 1 and 2, respectively, if the belt-reinforcing layer is made up of a low- modulus cord such as a Nylon cord, and so forth, a tread is prone to deformation because the rigidity of the tread, in the circumferential direction, is low, and at the time of running with the internal pressure in the range of 50 to 150 kPa, a ground contact area of the tire undergoes expansion in the circumferential direction. As a result, the tread undergoes large deformation to thereby cause strain of the tread to increase, resulting in premature failure of the tire. Further, if the belt-reinforcing layer is made up of a high-modulus cord composed of aramid fabric, and so forth, deformation of the tread is deterred because the rigidity of the tread, in the circumferential direction, is high, and at the time of running with the internal pressure in the range of 50 to 150 kPa, large strain is caused to occur to sidewalls to support a load of the vehicle. Accordingly, premature failure of the tire results. That is, whether the belt-reinforcing layer is made up of either the low- modulus cord or the high- modulus cord, the premature failure of the tire is unavoidable. Hence, it is desirable to enhance safety of the tire at the time of running with its internal pressure in the range of 50 to 150 kPa.

It is therefore an object of the invention to strike a balance between a load on the tread, and a load on the sidewalls to thereby enhance durability of the side-reinforced run flat tire at the time of running with its internal pressure in the range of 50 to 150 kPa, and to enhance safety.

A pneumatic tire according to the invention comprises a tread, sidewalls extending inward from respective ends of the tread, in the radial direction of the tire; beads positioned at respective ends of the sidewalls, on the inner side of the tire, in the radial direction thereof, the beads each having a bead core provided therein, a carcass ply in a toroidal form, extended up to the respective beads via the tread and the respective sidewalls, to be folded back along the periphery of the bead core in the respective beads from the inner side to the outer side of the bead core, in the direction of the axis of tire rotation to be thereby cocked outward in the radial direction of the tire; reinforcing rubber layers substantially crescentic in sectional shape, disposed on the inner sides of the respective sidewalls, in the direction of the axis of the tire rotation; a belt layer disposed on the inner side of the tread, in the radial direction of the tire, and on the outer side of the carcass ply, in the radial direction of the tire; and a belt-reinforcing layer disposed on the outer side of the belt layer, in the radial direction of the tire, wherein the belt-reinforcing layer is made up of a composite cord formed by twisting high-modulus fiber and low-modulus fiber together, a stress-strain curve thereof having a low-modulus region, and a high-modulus region.

The belt-reinforcing layer may be disposed so as to cover the belt layer as a whole.

More particularly, the belt-reinforcing layer may comprise a layer disposed so as to cover the belt layer as a whole, and layers disposed on the outer sides of respective ends of the layer, in the radial direction of the tire.

The composite cord may have characteristic wherein a stress-strain curve thereof has an inflection point between the low-modulus region and the high-modulus region, falling in a range of 2 to 7 % in strain.

According to the invention, the belt-reinforcing layer is disposed at a position where the respective ends thereof overlap respective ends of the reinforcing rubber layers, on respective sides thereof, adjacent to the tread, in the direction of the axis of the tire rotation, and a ratio of a length B of an overlapping portion between the belt-reinforcing layer, and the reinforcing rubber layer to a length A from an equatorial plane to the end of the belt-reinforcing layer is set to be 10 to 30 %,

In the pneumatic tire of the invention, in a region of the composite cord, smaller in strain, deformation of the tread is more tolerated than in the case of using the low-modulus cord, and deflection of the sidewall is more deterred than in the case of using the high-modulus cord. Further, when the strain of the composite cord reaches the high-modulus region, the composite cord exhibits modulus of elasticity higher than that in the case of using the low-modulus cord, so that the tread does not undergo such excessive deformation as will occur in the case of using the low-modulus cord.

It is also possible to prevent an increase in the deflection of the sidewall due to a decrease in tolerance in the deformation of the tread, and an increase in the deformation of the tread before the strain reaches the high-modulus region, in a preferred embodiment.

When said ratio B/A is in a range of 10 to 30%, it is possible to prevent deterioration in high-speed running performance, and durability, due to an increase in stored heat quantity at the time of running, and occurrence of a large difference in rigidity level at a boundary part between the end of the reinforcing rubber layer on the side thereof adjacent to the tread, and the end of the belt-reinforcing layer, thereby preventing premature failure of the tire from starting at the boundary part.

With the pneumatic tire according to the present invention, in the region of the composite cord, smaller in strain, the deformation of the tread is more tolerated than in the case of using the low-modulus cord, and the deflection of the sidewall is more deterred than in the case of using the high-modulus cord. Further, when the strain of the composite cord reaches the high-modulus region, the composite cord exhibits modulus of elasticity higher than that in the case of using the low-modulus cord, so that the tread does not undergo the excessive deformation as in the case of using the low-modulus cord. As a result, there will occur enhancement in center ground-contact length as well as durability of the tire in the case of an internal pressure thereof being kept in a range of 50 to 100 kPa, resulting in enhanced safety at the time of running with the internal pressure kept in the range of 50 to 100 kPa. That is, by striking a balance between a load on the tread, and a load on the sidewalls, the durability of the tire at the time of running with the internal pressure kept in the range of 50 to 100 kPa is enhanced to thereby enable the safety to be enhanced

The invention will be further described with reference to the accompanying drawings, wherein
Fig. 1 is a sectional view along the meridian line, showing the left half of one embodiment of a pneumatic tire according to the present invention, in the axial direction thereof.
Fig. 2 is a schematic representation showing positional relationship between a belt-reinforcing layer, and reinforcing rubber layers, according to the embodiment of the invention, in the direction of the axis of tire rotation.
Fig. 3 is a view showing another disposition example of the belt-reinforcing layer according to the embodiment of the present invention.
Fig. 4 is a view showing still another disposition example of the belt-reinforcing layer according to the embodiment of the present invention.
Fig. 5 is a schematic representation showing makeup of a composite cord according to the embodiment of the invention.
Fig. 6 is a view showing stress-strain curves of a high-modulus cord, low-modulus cord, and the composite cord, respectively.
Fig. 7 is a schematic representation showing respective side view images of side-reinforced run flat tires using the low-modulus cord, the high-modulus cord, and the composite cord according to the present invention, respectively, as the belt-reinforcing layer, at the time of running with an internal pressure of the tire kept in a range of 50 to 100 kPa.
Fig. 8 is a sectional view along the meridian line, showing the left half of a conventional pneumatic tire, in the axial direction thereof.

Embodiments of the invention are described hereinafter with reference to the accompanying drawings.

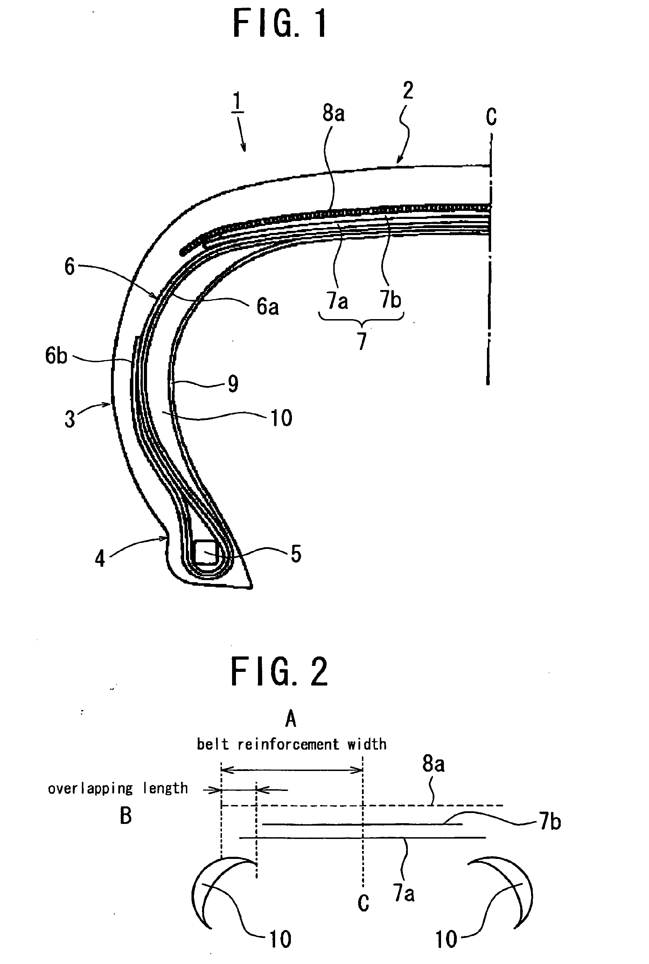

Fig. 1 is a sectional view along the meridian line, showing the left half of one embodiment of a pneumatic tire according to the present invention, in the axial direction thereof. As shown in Fig. 1, a pneumatic tire 1 according to the present embodiment, as a whole, is formed of rubber layers, and comprises a tread 2 that is part thereof, in contact with a road surface, sidewalls 3 extending inward from respective ends of the tread 2, in the radial direction of the pneumatic tire 1, and beads 4 positioned at respective ends of the sidewalls 3, on the inner side of the tire, in the radial direction thereof.

A bead core 5 used for fixing the pneumatic tire 1 to a rim, not shown, against an internal pressure is provided inside the respective beads 4. Further, there is provided a carcass ply 6 in a toroidal form, extended up to the respective beads 4 via the tread 2, and the respective sidewalls 3 to be folded back along the peripheries of the respective bead cores 5 in the beads 4 from the inner side to the outer side, in the direction of the axis of tire rotation so as to be thereby cocked outward in the radial direction of the tire. A portion of the carcass ply 6, extending from the inner side of the tread 2, in the radial direction of the tire, to the bead core 5 is a body portion 6a, and a portion of the carcass ply 6, folded back toward the external periphery of the bead core 5 is a fold-back part 6b. The rubber layers of the pneumatic tire 1 are reinforced by the carcass ply 6, and a shape of the tire in its entirety is thereby formed.

A belt layer 7 comprised of a first belt layer 7a and a second belt layer 7b is provided in a region on the inner side of the tread 2, in the radial direction of the tire, and on the outer side of the carcass ply 6, in the radial direction of the tire, and further, in the radial direction of the tire, there is provided a belt-reinforcing layer 8a. The belt-reinforcing layer 8a is called a cap. The belt layer 7 is not limited to two layers, but may comprise one layer, or three or more layers.

An inner liner 9 is stuck to the surface of the sidewall 3, on the inner side thereof, in the direction of the axis of tire rotation, and further a reinforcing rubber layer 10 substantially crescentic in sectional shape, extending from the tread 2 to the bead 4 via the sidewall 3 is provided in a region, on the inner side of the body portion 6a, in the direction of the axis of the tire rotation, and on the outer side of the inner liner 9, in the direction of the axis of the tire rotation, that is, in a portion of the carcass ply sandwiched between the body portion 6a and the inner liner 9.

The belt-reinforcing layer 8a is disposed so as to cover the whole width of the belt layer 7, in the direction of the axis of the tire rotation, respective ends of the belt-reinforcing layer 8a being extended beyond respective ends of the belt layer 7. Further, as to positional relationship between the belt-reinforcing layer 8a, and the reinforcing rubber layers 10, in the direction of the axis of the tire rotation, the belt-reinforcing layer 8a is disposed such that the respective ends thereof overlap respective ends of the reinforcing rubber layers 10, on respective sides thereof, adjacent to the tread 2. More specifically, assuming that a length (belt reinforcement width) from an equatorial plane C to one end of the belt-reinforcing layer 8a is designated as A, and a length (overlapping length) of an overlap (overlapped portion) between the belt-reinforcing layer 8a, and the reinforcing rubber layer 10 is designated as B, a ratio of B to A (B / A) is set to 10 to 30 %, as shown in Fig. 2. That is because if B / A exceeds 30 %, a thickness at the end of the belt-reinforcing layer 8a becomes excessive, so that there occurs an increase in stored heat quantity at the time of running, thereby causing deterioration in high-speed running performance and durability, while if B / A becomes less than 10 %, this causes occurrence of a large difference in rigidity level at a boundary part between the end of the reinforcing rubber layer 10, on the side thereof adjacent to the tread 2, and the end of the belt-reinforcing layer 8a, thereby causing premature failure of the tire to start from the boundary part.

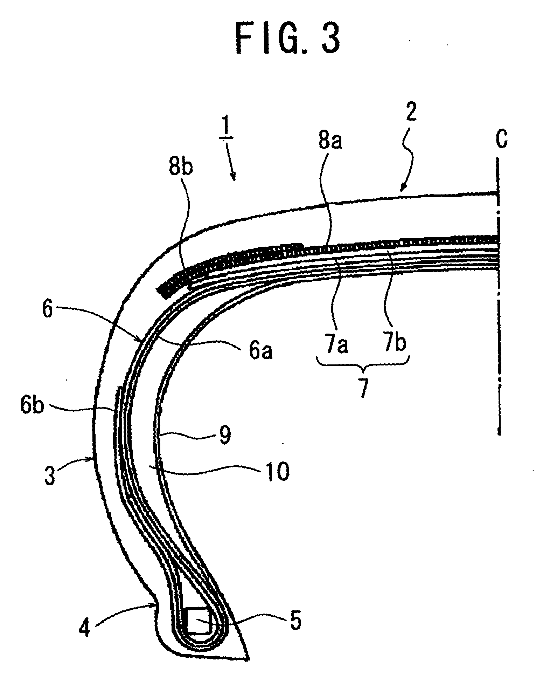

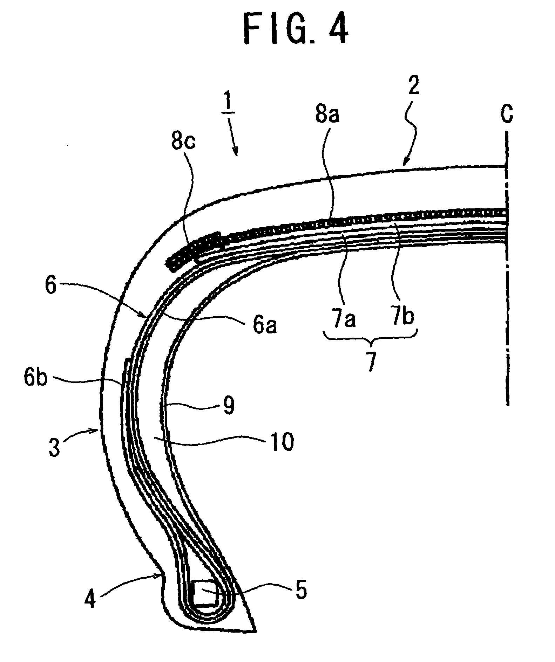

Further, in addition to the belt-reinforcing layer 8a in one layer, disposed so as to cover the whole width of the belt layer 7, in the direction of the axis of the tire rotation, the respective ends thereof being extended beyond respective ends of the belt layer 7, as shown in Fig. 1, a belt-reinforcing layer 8b in one layer may be provided at positions on the sides of the respective ends (respective shoulder sides) of the belt-reinforcing layers 8a, and on the outer side thereof, in the radial direction of the tire, so as to enable the belt-reinforcing layers 8b to overlap the second belt layers 7b, respectively, as shown in Fig. 3. The belt-reinforcing layer 8b is called a layer. Further, as shown in Fig. 4, a belt-reinforcing layer 8c in one layer may be provided at positions on the end sides of the respective belt-reinforcing layers 8a, on the outer sides thereof, in the radial direction of the tire, not to overlap the respective ends of the second belt layer 7b. The belt-reinforcing layer 8c is called a belt-reinforcing layer of an end-winding structure.

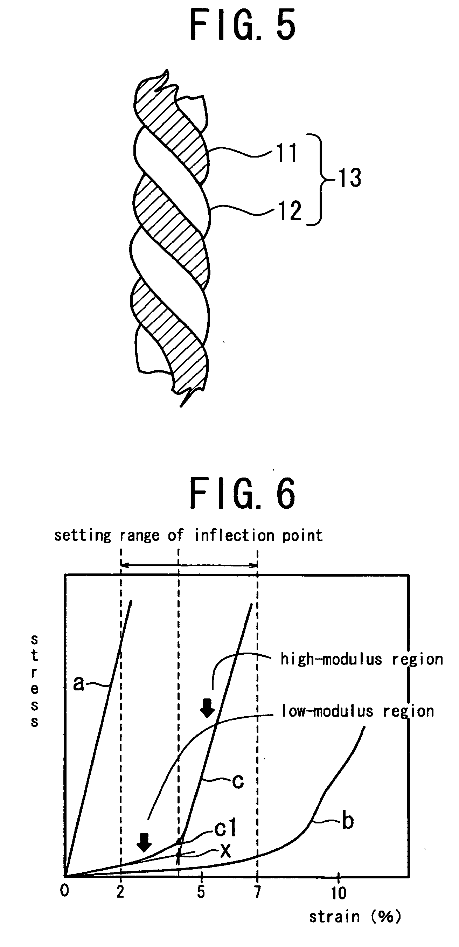

As shown in Fig. 5, the belt-reinforcing layers 8a, 8b, 8c are each formed with the use of a composite cord 13 made up by twisting together a high-elasticity cord 11 composed of a high-modulus fiber and a low- modulus cord 12 composed of a low-modulus fiber. Further, the belt-reinforcing layers 8a, 8b, 8c are each formed by winding a single strand of the composite cord 13, or a plurality of strands of the composite cords 13 in a bundle, on the outer side of the belt layer 7, in the radial direction of the tire, in such a way as to be in the form of a single helix or a plurality of helices.

The composite cord 13 is preferably formed by use of two strands of cords of 1670 dtex, composed of, for example, Kevlar (registered trademark) fiber for the high-modulus cord, and one strand of a cord of 940 dtex, composed of, for example, Nylon fiber for the low-modulus cord to be twisted together to serve as a dip cord such that an inflection point of a stress-strain curve is in a region where magnitude of strain falls in a region of 2 to 7 %.

Fig. 6 is a view showing stress-strain curves of the high-modulus cord composed of Kevlar fiber, the low-modulus cord composed of Nylon fiber, and the composite cord, respectively. In the figure, the vertical axis indicates stress, and the horizontal axis indicates strain. Curves a, b, c denote the respective stress-strain curves of the high-modulus cord, the low-modulus cord, and the composite cord.

Now, the stress-strain curve of the composite cord 13 is described hereinafter with reference to Fig. 6. When stress (tensile stress) is applied to the composite cord 13, the composite cord 13 undergoes elongation while being untwisted. Further, the elongation of the composite cord 13 causes a twist pitch thereof to become longer. The stress-strain curve has a low-modulus region relatively large in elongation, and a high-modulus region relatively small in elongation. An inflection point c1 of the stress-strain curve c of the composite cord 13 is an intersection point where a perpendicular passing through an intersection point X of a tangent line to the curve c with strain at 0 and a tangent line to the curve c at a rupture point (point where strain is at the maximum) crosses the curve c.

With the pneumatic tire made up as above, the composite cord 13 has the low-modulus region, so that deformation of the tread 2, in a region of the composite cord, smaller in strain, is more tolerated than in the case of using the high-modulus cord (the curve a in Fig. 6), and deflection of the sidewall 3 is more deterred than in the case of using the high-modulus cord. Further, when the strain of the composite cord 13 reaches the high-modulus region, the composite cord 13 exhibits modulus of elasticity higher than that for the low-modulus cord (the curve b in Fig. 6), so that the tread 2 does not undergo such excessive deformation as will occur in the case of using the nylon cord.

As shown in Fig. 6, the inflection point c1 of the stress-strain curve c of the composite cord 13 is preferably set to fall in a range of 2 to 7% in strain. If the inflection point c1 falls in a range less than 2 % in strain, tolerance in the deformation of the tread 2 becomes smaller, so that the deflection of the sidewall 3 becomes greater. Conversely, if the inflection point c1 falls in a range exceeding 7 % in strain, the deformation of the tread 2 becomes too great before the strain reaches the high-modulus region. Hence, the range from 2 to 7 % is preferable, and a range from 2 to 4 % is more preferable.

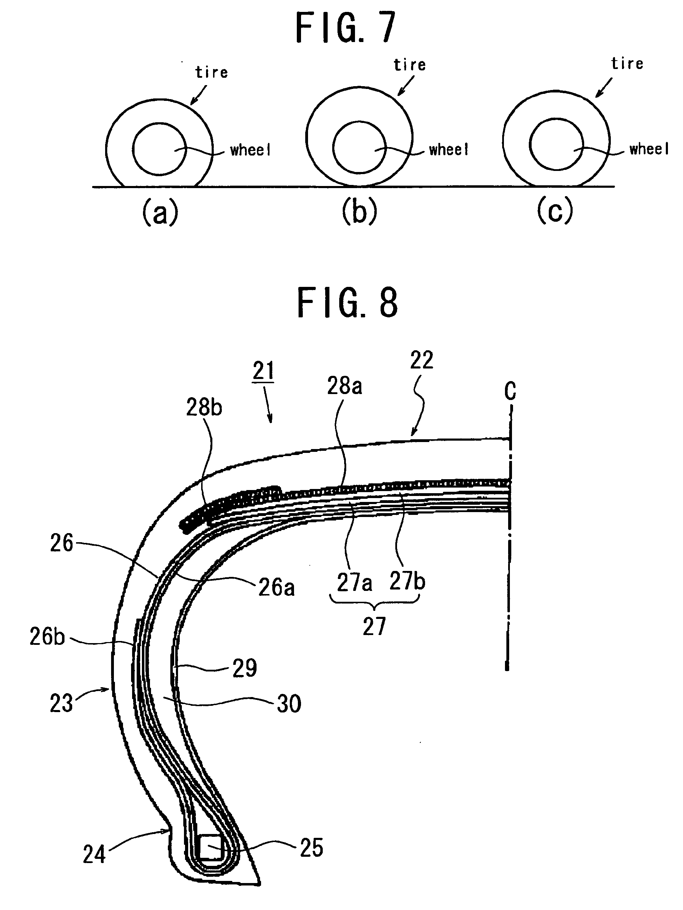

Fig. 7 is a schematic representation showing side view appearances of side-reinforced run flat tires using the low-modulus cord, the high-modulus cord, and the composite cord according to the present invention, as the belt-reinforcing layer, respectively, at the time of running with the internal pressure kept in the range of 50 to 100 kPa.

Fig. 7A is a view showing the case of using the low-modulus cord. In this case, the tread is prone to deformation because the rigidity of the tread, in the circumferential direction, is low, as previously described, and the ground contact area of the tire undergoes expansion in the circumferential direction. As a result, the tread undergoes large deformation to thereby cause strain of the tread to increase.

Fig. 7B is a view showing the case of using the high-modulus cord. In this case, the deformation of the tread is deterred because the rigidity of the tread, in the circumferential direction, is high, as previously described, to thereby cause large strain to occur to the sidewall.

Fig. 7C is a view showing the case of using the composite cord according to the present invention. In this case, in the region of the composite cord, smaller in strain, the deformation of the tread is more tolerated than in the case of using the high-modulus cord, and the deflection of the sidewall is more deterred than in the case of using the high-modulus cord, as previously described. Further, when the strain reaches the high-modulus region, the tread does not undergo such excessive deformation as will occur in the case of using the low-modulus cord. That is, both the deformation of the tread, and the deflection of the sidewall are moderate in magnitude, thereby keeping the tire in such a shape as well - balanced.

Examples 1 to 6, and comparative examples 1, 2 were prepared, and measurements were taken on respective center ground-contact lengths as well as durabilities thereof in the case of an internal pressure being kept at 75 kPa as an example of the case of the internal pressure being kept in the range of 50 to 100 kPa. Results of the measurements are shown in Tables 1 and 2. Herein, the center ground-contact lengths were obtained by measuring the ground-contact length of a central part of each of tires on conditions of a tire size: 215 / 45R17, rim: 7JX17, internal pressure: 75 kPa, and load: 4.0 kN, and by indexing the respective ground-contact lengths on the basis of the center ground-contact length of comparative example 1, designated as 100 (index). Further, the durabilities were obtained by fitting all 4 wheels with each of tires prepared on conditions of the tire size: 215 / 45R17, rim: 7JX17, internal pressure: 75 kPa, and a load corresponding to a vehicle and 2 persons therein, and by measuring a distance (endurance distance) until the tire blows out or fails to thereby index the respective durabilities on the basis of the durability of comparative example 1, designated as 100 (index). In the rows for a belt-reinforcing structure, shown in Tables 1 and 2, respectively, "1 Cap" refers to a structure provided with the cap in one layer (corresponding to Fig.1), "C / L " refers to a structure provided with a cap in one layer, and a layer in one layer (corresponding to Fig.3), and "1 Cap + end-winding" refers to a structure provided with a cap in one layer, and an end-winding structure in one layer (corresponding to Fig.4).

Herein, a load refers to a maximum load (maximum load capacity) of a single wheel in applicable size as set out in the following specification, an internal pressure refers to an air pressure corresponding to a maximum load (maximum load capacity) in applicable size as set out in the following specification, and a rim refers to the standard rim ("approved rim" or "recommended rim") in applicable size as set out in the following specification. Further, the specification is determined on the basis of respective industrial specifications effective in regions where tires are in production, or in use. For example, in the U. S. A., the specification is based on "Year Book of The Tire and Rim Association Inc.", in Europe, on "Standards Manual of The European Tire and Rim Technical Organization", and in Japan, on "JATMA Year Book" issued by The Japan Automobile Tire Manufacturers Association, Inc.

**Table 1**

| | Example 1 | Example 2 | Example 3 | Example 4 |
|---|---|---|---|---|
| belt-reinforcing material | (Kevlar 1670 dtex × 2 + Nylon 940 dtex) / 3 | ← | ← | (Kevlar 1670 dtex + Nylon 940 dtex) / 2 |
| inflection point of low/high moduli | 2.5 % | 2.5 % | 2.5 % | 5.0 % |
| belt-reinforcing structure | 1 Cap | C / L | 1 Cap + end-winding | C / L |
| overlap of belt-reinforcing layer and side-reinforcing rubber layer | 15 % | 20 % | 20 % | 25 % |
| center ground-contact length | 75 | 73 | 73 | 82 |
| durability | 200 | 220 | 215 | 175 |

**Table 2**

| | Compara. Example 1 | Compara. Example 2 | Example 5 | Example 6 |
|---|---|---|---|---|
| belt-reinforci ng material | Nylon 1400 dtex) / 2 | Kevlar 1670 dtex / 2 | (Kevlar 1100 dtex ×2 + Nylon 940 dtex) / 3 | (Kevlar 1670 dtex ×2 + Nylon 940 dtex) / 3 |
| inflection point of low/high moduli | only in a low-modulus region | only in a hi-modulus region | 3.5 % | 2.5 % |
| belt-reinforci ng structure | C / L | C / L | 1 Cap | 1 Cap |
| overlap of belt-reinforci ng layer and side-reinforci ng rubber layer | 15 % | 15 % | 20 % | 5 % |
| center ground-contact length | 100 | 56 | 80 | 75 |
| durability | 100 | 80 | 185 | 130 |

Based on Tables 1 and 2, it is evident that with any of the examples 1 to 6, the center ground-contact length is longer than that for the comparative example 2 using the Kevlar cord only, but shorter than that for the comparative example 1 using the Nylon cord only. Further, with any of the examples 1 to 6, results show that durability significantly exceeds that for the comparative example 1 and 2, respectively.

The present invention is effective for application to a side-reinforced run flat tire high in safety at the time of running with the internal pressure kept in the range of 50 to 100 kPa.

## Claims

1. A pneumatic tire (1) comprising a tread (2); sidewalls (3) extending inward from respective ends of the tread, in the radial direction of the tire; beads (4) positioned at respective ends of the sidewalls, on the inner side of the tire, in the radial direction thereof, the beads each having a bead core (5) provided therein; a carcass ply (6) in a toroidal form, extended up to the respective beads via the tread and the respective sidewalls, to be folded back along the periphery of the bead core in the respective beads from the inner side to the outer side of the bead core, in the direction of the axis of tire rotation to be thereby cocked outward in the radial direction of the tire; reinforcing rubber layers (10) substantially crescentic in sectional shape, disposed on the inner sides of the respective sidewalls, in the direction of the axis of the tire rotation; a belt layer (7) disposed on the inner side of the tread, in the radial direction of the tire, and on the outer side of the carcass ply, in the radial direction of the tire; and a belt-reinforcing layer (8a) disposed on the outer side of the belt layer, in the radial direction of the tire, **characterized in that** the belt-reinforcing layer is made up of a composite cord (13) formed by twisting high-modulus fiber (11) and low-modulus fiber (12) together, a stress-strain curve thereof having a low-modulus region, and a high-modulus region; and
wherein the belt-reinforcing layer (8a) is disposed at a position where the respective ends thereof overlap respective ends of the reinforcing rubber layers (10), on respective sides thereof, adjacent to the tread (2), in the direction of the axis of the tire rotation, and a ratio of a length (B) of an overlapping portion between the belt-reinforcing layer and the reinforcing rubber layer to a length (A) from an equatorial plane (C) to the end of the belt-reinforcing layer is set to be 10 to 30 %.

2. A pneumatic tire as claimed in claim 1, wherein the belt-reinforcing layer(8a) is disposed so as to cover the belt layer (7) as a whole.

3. A pneumatic tire as claimed in claim 2, wherein the belt-reinforcing layer comprises a layer (8a) disposed so as to cover the belt layer as a whole, and layers (8b) disposed on the outer sides of respective ends of the layer (8a), in the radial direction of the tire.

4. A pneumatic tire as claimed in any of claims 1 to 3, wherein the composite cord has characteristic wherein a stress-strain curve thereof has an inflection point between the low-modulus region, and the high-modulus region, falling in a range of 2 to 7 % in strain.

## Patentansprüche

1. Luftreifen (1), der Folgendes umfasst: eine Lauffläche (2), Seitenwände (3), die sich von den jeweiligen Enden der Lauffläche aus, in der Radialrichtung des Reifens, nach innen erstrecken, Wülste (4), die an den jeweiligen Enden der Seitenwände, auf der Innenseite des Reifens, in der Radialrichtung desselben, angeordnet sind, wobei die Wülste jede einen in derselben bereitgestellten Wulstkern (5) haben, eine Karkassenlage (6) in einer Kreisringform, die sich über die Lauffläche und die jeweiligen Seitenwände bis hinauf zu den jeweiligen Wülsten erstreckt, um längs des Umfangs des Wulstkerns in den jeweiligen Wülsten von der Innenseite zu der Außenseite des Wulstkerns, in der Radialrichtung des Reifens, umgeschlagen zu sein, verstärkende Gummilagen (10), in der Querschnittsform im Wesentlichen halbmondförmig, die auf den Innenseiten der jeweiligen Seitenwände, in der Richtung der Achse der Reifendrehung, angeordnet sind, eine Gürtellage (7), die auf der Innenseite der Lauffläche, in der Radialrichtung des Reifens, und auf der Außenseite der Karkassenlage, in der Radialrichtung des Reifens, angeordnet ist, und eine Gürtelverstärkungslage (8a), die auf der Außenseite der Gürtellage, in der Radialrichtung des Reifens, angeordnet ist, **dadurch gekennzeichnet, dass** die Gürtelverstärkungslage aus einem Verbundkord (13) besteht, der durch Zusammenzwirnen von Faser (11) mit hohem Modul und Faser (12) mit niedrigem Modul geformt ist, wobei eine Spannungs-Dehnungskurve desselben einen Bereich mit hohem Modul und einen Bereich mit niedrigem Modul hat, und
wobei die Gürtelverstärkungslage (8a) an einer Position angeordnet ist, wo die jeweiligen Enden derselben die jeweiligen Enden der verstärkenden Gummilagen (10) überlappen, auf den jeweiligen Seiten derselben, angrenzend an die Lauffläche (2), in der Richtung der Achse der Reifendrehung, und ein Verhältnis einer Länge (B) eines überlappenden Abschnitts zwischen der Gürtelverstärkungslage und der verstärkenden Gummilage zu einer Länge (A) von einer Äquatorialebene (C) bis zu dem Ende der Gürtelverstärkungslage so festgesetzt ist, dass es 10 bis 30 % beträgt.

2. Luftreifen nach Anspruch 1, wobei die Gürtelverstärkungslage (8a) so angeordnet ist, dass sie die Gürtellage (7) als Ganzes bedeckt.

3. Luftreifen nach Anspruch 2, wobei die Gürtelverstärkungslage eine Lage (8a), die so angeordnet ist, dass sie die Gürtellage als Ganzes bedeckt, und Lagen (8b), die auf den Außenseiten der jeweiligen Enden der Lage (8a), in der Radialrichtung des Reifens, angeordnet sind, umfasst.

4. Luftreifen nach einem der Ansprüche 1 bis 3, wobei der Verbundkord eine Charakteristik hat, wobei eine Spannungs-Dehnungskurve desselben einen Wendepunkt zwischen dem Bereich mit niedrigem Modul und dem Bereich mit hohem Modul hat, der in einen Bereich von 2 bis 7 % bei der Dehnung fällt.

## Revendications

1. Bandage pneumatique (1), comprenant une bande de roulement (2) ; des flancs (3) s'étendant vers l'intérieur à partir des extrémités respectives de la bande de roulement, dans la direction radiale du bandage pneumatique ; des talons (4) positionnés au niveau des extrémités respectives des flancs, sur le côté interne du bandage pneumatique, dans la direction radiale de celui-ci, les talons comportant chacun une tringle (5) qui y est agencée ; une nappe de carcasse (6) de forme toroïdale, s'étendant jusqu'aux talons respectifs à travers la bande de roulement et les flancs respectifs, destinée à être repliée vers l'arrière le long de la périphérie de la tringle dans les talons respectifs, du côté interne vers le côté externe de la tringle, dans la direction de l'axe de rotation, afin de la soulever vers l'extérieur dans la direction radiale du bandage pneumatique ; des couches de gomme de renforcement (10) ayant une forme de section pratiquement en forme de croissant, agencées sur les côtés internes des flancs respectifs, dans la direction de l'axe de rotation du bandage pneumatique ; une couche de ceinture (7) agencée sur le côté interne de la bande de roulement, dans la direction radiale du bandage pneumatique, et sur le côté externe de la nappe de carcasse, dans la direction radiale du bandage pneumatique ; et une couche de renforcement de la ceinture (8a) agencée sur le côté externe de la couche de ceinture, dans la direction radiale du bandage pneumatique, **caractérisé en ce que** la couche de renforcement de la ceinture est composée d'un câblé composite (13) formé en assemblant par torsion une fibre à module élevé (11) et une fibre à module réduit (12), une courbe de contrainte-tension correspondante comportant une région à module réduit et une région à module élevé ; et
la couche de renforcement de la ceinture (8a) est agencée au niveau d'une position dans laquelle ses extrémités respectives chevauchent les extrémités respectives des couches de gomme de renforcement (10), sur les côtés respectifs de celles-ci, près de la bande de roulement (2), dans la direction de l'axe de rotation du bandage pneumatique, un rapport entre une longueur (B) d'une partie à chevauchement entre la couche de renforcement de la ceinture et la couche de gomme de renforcement et une longueur (A) entre un plan équatorial (C) et l'extrémité de la couche de renforcement de la ceinture étant ajustée de sorte à représenter 10 à 30%.

2. Bandage pneumatique selon la revendication 1, dans lequel la couche de renforcement de la ceinture (8a) est agencée de sorte à recouvrir la couche de ceinture (7) dans son ensemble.

3. Bandage pneumatique selon la revendication 2, dans lequel la couche de renforcement de la ceinture comprend une couche (8a) agencée de sorte à recouvrir la couche de ceinture dans son ensemble, et des couches (8b) agencées sur les côtés externes des extrémités respectives de la couche (8a), dans la direction radiale du bandage pneumatique.

4. Bandage pneumatique selon l'une quelconque des revendications 1 à 3, dans lequel le câblé composite présente une caractéristique selon laquelle une courbe contrainte-tension de celui-ci présente un point d'inflexion entre la région à module réduit et la région à module élevé, compris dans un intervalle représentant 2 à 7% sous tension.
